# EUROPÄISCHE PATENTANMELDUNG

(11) **EP 3 311 972 A1**
(43) Veröffentlichungstag der Anmeldung: **25.04.2018**
(21) Anmeldenummer: 16194381.6
(22) Anmeldetag: 18.10.2016
(51) Int. Cl.: B29C 39/00, A45D 40/16, B29C 35/16, B29C 39/38, B29C 67/24

(54) **ADIABATISCHE KÜHLUNG VON GIESSFORMEN**

(71) Anmelder: Weckerle GmbH, 82362 Weilheim (DE)
(72) Erfinder: Droste, Sven, 82380 Peissenberg (DE)
(74) Vertreter: Hohgardt, Martin

(57) **Zusammenfassung**

Ein Verfahren und eine Vorrichtung zum Kühlen von Gießformen, insbesondere zum Kühlen von Gießformen für kosmetische Produkte, werden beschrieben. Die Vorrichtung weist zumindest eine Einhausung (3) auf mit zumindest einer Öffnung zum zumindest teilweise Einbringen von zumindest einer Gießform (1) in die zumindest eine Einhausung (3). Sie weist weiter zumindest eine Düse (5) auf zum Erzeugen eines feuchten Nebels (6) innerhalb der zumindest einen Einhausung (3) durch Vermischen eines gasförmigen und eines flüssigen Mediums und zum Hervorrufen einer Konvektion innerhalb der zumindest einen Einhausung (3) durch Einleiten nur des gasförmigen Mediums in die zumindest eine Einhausung (3).

## Beschreibung

Die vorliegende Erfindung betrifft im Allgemeinen das Kühlen von Gießformen, insbesondere das Kühlen von Gießformen für kosmetische Produkte.

Gießformen dienen bei der Herstellung von kosmetischen Produkten beispielsweise zur Aufnahme eines erwärmten und fließfähigen Gemisches unterschiedlicher Wachse und Additive, das als pastöse Masse bezeichnet werden kann. Die erwärmte pastöse Masse wird in die Gießformen gefüllt, um anschließend abzukühlen und zu erstarren, sodass die erwärmte pastöse Masse eine bestimmte Form annimmt. Die Gießformen können dabei beispielsweise dazu verwendet werden, Lippenstiftminen zu formen. Die Gestalt der geformten Lippenstiftmine entspricht dabei der inneren Kontur der Gießform, in die die erwärmte pastöse Masse gefüllt wurde, und in der diese abgekühlt und erstarrt ist. Das Abkühlen kann dabei auf passive oder auf aktive Weise geschehen. Ein passives Abkühlen kann beispielsweise durch Wärmestrahlung herbeigeführt werden. Hierbei strahlt die Gießform, die mit der erwärmten pastösen Masse gefüllt ist, und die eine höhere Temperatur hat als ihre Umgebung, Energie in Form eines Wärmestromes ab. Der dadurch auftretende Energieverlust resultiert in der Abkühlung der Oberfläche der Gießform. Ein aktives Abkühlen kann beispielsweise durch Wärmeübertragung herbeigeführt werden. Hierbei wird die Gießform, die mit der erwärmten pastösen Masse gefüllt ist, und die eine höhere Temperatur hat als ihre Umgebung, in Kontakt mit einem Medium gebracht, das kälter ist, als die Gießform. Bedingt durch die Temperaturdifferenz, beginnt eine Wärmeübertragung von dem wärmeren Medium, also von der Gießform, zu dem kälteren Medium hin. Bei dem aktiven Abkühlen kann die übertragene Wärmemenge pro Zeiteinheit erhöht werden, indem ein Umströmen der Oberfläche der Gießform von dem kalten Medium aktiv hervorgerufen wird. Ein solches Verfahren kann als aktives Kühlverfahren bezeichnet werden.

Im Stand der Technik sind verschiedene Verfahren und Vorrichtungen bekannt, mit deren Hilfe Gießformen aktiv gekühlt werden können. Beispielsweise wird in der EP 1 437 062 A1 beschrieben, dass Gießformen in eine Umgebung mit kühler Luft eingebracht werden, in der die Gießformen von der kühlen Luft umströmt werden und den Gießformen somit durch erzwungene Konvektion Wärme entzogen wird. Hierbei findet eine Wärmeübertragung zwischen den Gießformen und der kühlen Luft statt.

Diese Art der Kühlung ist aber wenig effizient, weil Luft bei Kontakt mit Oberflächen einen niedrigen Wärmeübertragungskoeffizienten aufweist. Der Begriff Effizienz beschreibt im Allgemeinen das Verhältnis zwischen einem erreichten Ergebnis und dem dafür aufgebrachten Aufwand. Bei der Kühlung von Gießformen beschreibt der Begriff Effizienz speziell das Verhältnis von entzogener Wärmemenge und aufgebrachter Energie. Da zwischen Luft und der Oberfläche einer Gießform ein relativ niedriger Wärmeübertragungskoeffizient zu beobachten ist, bedeutet dies, dass man relativ viel Energie aufbringen muss, um der Gießform eine bestimmte Wärmemenge zu entziehen. Für den Entzug einer großen Wärmemenge mittels Luftkühlung wird entweder eine große Kontaktfläche oder eine hohe Umströmungsgeschwindigkeit oder eine Kombination von beiden benötigt. Die Luftkühlung ist also im Vergleich zu anderen Kühlmethoden wenig effizient.

Aufgabe der vorliegenden Erfindung ist es daher, ein Verfahren und eine Vorrichtung bereitzustellen, die den oben genannten Nachteil nicht aufweisen. Insbesondere soll mit dem Verfahren und der Vorrichtung eine möglichst effiziente Kühlung von Gießformen realisiert werden.

Diese Aufgabe wird mit dem Verfahren und der Vorrichtung der unabhängigen Ansprüche gelöst. Vorteilhafte Ausführungsformen sind in den Unteransprüchen beschrieben.

Das erfindungsgemäße Verfahren zum Kühlen von Gießformen, insbesondere zum Kühlen von Gießformen für kosmetische Produkte, weist auf das zumindest teilweise Einbringen von zumindest einer Gießform in zumindest eine Einhausung, das Erzeugen eines feuchten Nebels innerhalb der zumindest einen Einhausung durch Vermischen eines gasförmigen und eines flüssigen Mediums mittels einer Düse und das Hervorrufen einer Konvektion innerhalb der zumindest einen Einhausung durch Einleiten nur des gasförmigen Mediums in die zumindest eine Einhausung mittels der Düse. Die Einhausung stellt dabei einen geometrischen Körper dar, der in seinem Inneren leer ist und der somit mit seinen Wänden einen bestimmten Bereich bzw. ein bestimmtes Volumen einschließt. Nach dem Einbringen der Gießform in die Einhausung ist die äußere Oberfläche der Gießform dadurch einem Volumen ausgesetzt, das von den Wänden der Einhausung begrenzt wird. Dabei kann die Gießform auch nur zumindest teilweise in die Einhausung eingebracht werden, wodurch beispielsweise nur ein Teil der äußeren Oberfläche der Gießform sich innerhalb der Einhausung befindet. Innerhalb der Einhausung befindet sich zudem zumindest eine Düse mittels der ein gasförmiges und ein flüssiges Medium vermischt und in die Einhausung eingebracht werden können. Das Vermischen des gasförmigen und des flüssigen Mediums mittels der Düse kann auch als zerstäuben des flüssigen Mediums bezeichnet werden. Durch das Zerstäuben des flüssigen Mediums wird innerhalb der Einhausung ein feuchter Nebel erzeugt. Der feuchte Nebel ist dadurch gekennzeichnet, dass er nässend ist und dass er somit Oberflächen, die ihm ausgesetzt werden, benetzt. Die Tropfen des flüssigen Mediums haben dabei vorzugsweise eine Tropfengröße zwischen 20 und 40 µm und setzen sich an den Oberflächen innerhalb der Einhausung ab, wodurch auch der Teil der äußeren Oberfläche der Gießform, der sich innerhalb der Einhausung befindet, mit den Tropfen benetzt wird. Die äußere Oberfläche der Gießform kann dabei hydrophil sein, d.h. die Tropfen des feuchten Nebels können sich leicht auf ihr absetzen. Dabei kann die Gießform beispielsweise aus einem hydrophilen Material bestehen oder die äußere Oberfläche der Gießform kann mit einem hydrophilen Material ummantelt sein. Die innere Oberfläche der Einhausung kann hingegen hydrophob sein, d.h. die Tropfen des feuchten Nebels können sich nur schwer auf ihr absetzen. Die Tropfen, die sich auf der äußeren Oberfläche der Gießform abgesetzt haben, beginnen aufgrund der hohen Temperatur der Gießform zu verdunsten. Bei der Verdunstung gehen die Tropfen vom flüssigen in den gasförmigen Zustand über, ohne zu sieden. Durch den Zustandsübergang bei der Verdunstung der Tropfen wird der äußeren Oberfläche der Gießform Wärme entzogen. Dieser Vorgang wird auch als Verdunstungskühlung oder als adiabatische Kühlung bezeichnet. Die Verdunstung der Tropfen auf der äußeren Oberfläche der Gießform kann beschleunigt werden, indem innerhalb der Einhausung eine Konvektion hervorgerufen wird, die auch als erzwungene Konvektion bezeichnet werden kann. Durch die beschleunigte Verdunstung wird die Wärmemenge, die der äußeren Oberfläche der Gießform pro Zeiteinheit entzogen wird, erhöht. Der Begriff Konvektion beschreibt dabei eine Teilchenbewegung, bei der die sich bewegenden Teilchen Wärme transportieren. Die erzwungene Konvektion wird dabei mittels derselben Düse hervorgerufen, mit der der feuchte Nebel erzeugt wird. Hierfür wird nur das gasförmige Medium mittels der Düse in die Einhausung eingebracht. Die Düse kann dabei verschieden ausgerichtet werden, um beispielsweise die Strömungsrichtung des gasförmigen Mediums bei der erzwungenen Konvektion zu steuern. Dem Fachmann ist bewusst, dass die Wärmemenge, die der äußeren Oberfläche der Gießform pro Zeiteinheit entzogen wird, auch dadurch erhöht werden kann, indem das gasförmige und / oder das flüssige Medium vor dem Einbringen in die Einhausung vorgekühlt werden. Die Medien können also zum Beispiel vor dem Einbringen in die Einhausung entweder bereits vor der Zuleitung, während der Zuleitung oder in der Düse selbst vorgekühlt werden.

Es wird deutlich, dass das erfindungsgemäße Verfahren erstmalig ein Verfahren bereitstellt, mit dem Gießformen mittels einer kombinierten Verdunstungskühlung und einer erzwungenen Konvektion effizient gekühlt werden.

Vorzugsweise weist das zumindest teilweise Einbringen von der zumindest einen Gießform in die zumindest eine Einhausung ein Bewegen der zumindest einen Einhausung und / oder der zumindest einen Gießform auf. Die Gießform kann beispielsweise derartig bewegt werden, dass ein bestimmter Teil ihrer äußeren Oberfläche in die Einhausung eingebracht wird, während die Einhausung nicht bewegt wird. Es kann aber auch die Einhausung derartig bewegt werden, dass sie einen bestimmten Teil der äußeren Oberfläche der Gießform einschließt oder umschließt, während die Gießform nicht bewegt wird. Es können aber auch die Einhausung und die Gießform bewegt werden, sodass ein bestimmter Teil der äußeren Oberfläche der Gießform in die Einhausung eingebracht wird. Bei dem zumindest teilweise Einbringen der Gießform in die Einhausung führen also die Einhausung und die Gießform eine Relativbewegung zueinander aus. Diese Relativbewegung kann dabei durch eine Bewegung der Einhausung und / oder der Gießform hervorgerufen werden. Die zumindest eine Gießform kann auch auf zumindest einem Strukturelement befestigt sein und die zumindest eine Einhausung kann auch auf zumindest einem anderen Strukturelement befestigt sein. Um die Relativbewegung der zumindest einen Gießform und der zumindest einen Einhausung zueinander hervorzurufen, kann auch das zumindest eine Strukturelement, an dem die zumindest eine Einhausung befestigt ist und / oder das zumindest eine Strukturelement, an dem die zumindest eine Gießform befestigt ist, bewegt werden.

In einer weiteren bevorzugten Ausführungsform des erfindungsgemäßen Verfahrens weist das Verfahren auf das Steuern der Strömungsgeschwindigkeiten des gasförmigen und des flüssigen Mediums aus der zumindest einen Düse bei dem Erzeugen des feuchten Nebels und / oder bei dem Hervorrufen der Konvektion. Mit dem Steuern der Strömungsgeschwindigkeiten kann beispielsweise die Tropfengröße bei dem Zerstäuben gesteuert werden. Dabei gilt, dass mit zunehmender Strömungsgeschwindigkeit des gasförmigen Mediums, das in der zumindest einen Düse mit dem flüssigen Medium vermischt wird, nach dem Vermischen die Tropfengröße des flüssigen Mediums in dem erzeugten feuchten Nebel abnimmt. Kleine Tropfen erlauben im Gegensatz zu großen Tropfen beispielsweise eine gleichmäßigere Verteilung der Tropfen auf der äußeren Oberfläche der zumindest einen Gießform, was beispielsweise bei der Verdunstung zu einem gleichmäßigeren Wärmeabtransport führt. Jedoch muss darauf geachtet werden, dass die Tropfen eine bestimmte Größe nicht unterschreiten, da sie sonst die Oberfläche der zumindest einen Gießform nur schlecht benetzen. Mit dem Steuern der Strömungsgeschwindigkeiten kann beispielsweise auch die Menge des flüssigen Mediums in dem erzeugten feuchten Nebel gesteuert werden. Je höher die Strömungsgeschwindigkeit des flüssigen Mediums ist, das in der zumindest einen Düse mit dem gasförmigen Medium vermischt wird, desto mehr flüssiges Medium wird pro Zeiteinheit mit dem gasförmigen Medium vermischt und desto mehr flüssiges Medium wird somit pro Zeiteinheit in die Einhausung eingebracht. Mit der Steuerung der Menge des flüssigen Mediums, das pro Zeiteinheit in die Einhausung eingebracht wird, kann beispielsweise die Zeitdauer gesteuert werden, die benötigt wird, um die äußere Oberfläche der zumindest einen Gießform mit dem flüssigen Medium zu benetzen. Je mehr flüssiges Medium pro Zeiteinheit in die Einhausung eingebracht wird, desto schneller wird die äußere Oberfläche der zumindest einen Gießform benetzt. Bei dem Hervorrufen der Konvektion kann mit dem Steuern der Strömungsgeschwindigkeit des gasförmigen Mediums aus der zumindest einen Düse die Menge des gasförmigen Mediums, das pro Zeiteinheit in die Einhausung eingebracht wird und somit die äußere Oberfläche der zumindest einen Gießform umströmt, gesteuert werden. Je höher die Menge des gasförmigen Mediums ist, das pro Zeiteinheit die äußere Oberfläche der zumindest einen Gießform umströmt, desto mehr Wärme wird der äußeren Oberfläche der zumindest einen Gießform pro Zeiteinheit entzogen. Darüber hinaus kann mit dem Steuern der Strömungsgeschwindigkeiten des gasförmigen und des flüssigen Mediums aus der zumindest einen Düse auch die Menge der Tropfen gesteuert werden, die nach dem Vermischen der beiden Media in die Einhausung eingebracht werden. Somit kann beispielsweise auch die Luftfeuchtigkeit innerhalb der Einhausung gesteuert werden.

In einer weiteren bevorzugten Ausführungsform des erfindungsgemäßen Verfahrens weist das Verfahren auf das Bestimmen zumindest einer Temperatur der zumindest einen Gießform und das Steuern der Strömungsgeschwindigkeiten des gasförmigen und des flüssigen Mediums aus der zumindest einen Düse bei dem Erzeugen des feuchten Nebels und / oder bei dem Hervorrufen der Konvektion, basierend auf der zumindest einen bestimmten Temperatur. Das Bestimmen einer Temperatur kann dabei das Messen einer Temperatur sein. Die zumindest eine Gießform, die mit der erwärmten pastösen Masse gefüllt ist, weist im Vergleich zu ihrer Umgebung zunächst eine höhere Temperatur auf. Diese Temperatur der Gießform kann als erste Temperatur bezeichnet werden. Nachdem der Abkühlprozess abgeschlossen ist, weist die Gießform eine niedrigere Temperatur als die erste Temperatur auf. Diese Temperatur der Gießform am Ende des Abkühlprozesses kann als zweite Temperatur bezeichnet werden. Die zweite Temperatur der Gießform kann bestimmt werden und mit einem Sollwert der zweiten Temperatur verglichen werden. Ist die bestimmte zweite Temperatur höher als der Sollwert der zweiten Temperatur, deutet dies darauf hin, dass der Gießform während des Abkühlprozesses zu wenig Wärme entzogen wurde. Basierend auf der bestimmten zweiten Temperatur der Gießform, können die Strömungsgeschwindigkeiten des gasförmigen und des flüssigen Mediums aus der zumindest einen Düse so angepasst werden, dass der zumindest einen Gießform während des Abkühlprozesses mehr Wärme entzogen wird. Beispielsweise können bei dem Erzeugen des feuchten Nebels die Strömungsgeschwindigkeiten des gasförmigen und des flüssigen Mediums so angepasst werden, dass pro Zeiteinheit eine größere Menge des feuchten Nebels erzeugt wird. Es kann beispielsweise auch die Strömungsgeschwindigkeit des gasförmigen Mediums bei dem Hervorrufen der Konvektion erhöht werden. Umgekehrt gilt, dass die Wärmemenge, die der zumindest einen Gießform während des Abkühlprozesses entzogen wird, reduziert werden kann, wenn die bestimmte zweite Temperatur niedriger ist als der Sollwert. Dies kann beispielsweise umgesetzt werden, indem die Strömungsgeschwindigkeiten des gasförmigen und des flüssigen Mediums aus der zumindest einen Düse so angepasst werden, dass eine geringere Menge des feuchten Nebels erzeugt wird. Es kann auch die Strömungsgeschwindigkeit des gasförmigen Mediums bei dem Hervorrufen der Konvektion verringert werden, um somit der zumindest einen Gießform weniger Wärme zu entziehen. Dem Fachmann sind noch weitere Möglichkeiten bekannt, mit denen die Strömungsgeschwindigkeiten des gasförmigen und des flüssigen Mediums aus der zumindest einen Düse, basierend auf der zumindest einen bestimmten Temperatur so angepasst werden können, dass der zumindest einen Gießform während des Abkühlprozesses eine bestimmte Wärmemenge entzogen wird. Beispielsweise kann neben der zweiten Temperatur auch die Temperaturänderung der Gießform während des Abkühlprozesses bestimmt werden. Die bestimmte Temperaturänderung während des Abkühlprozesses stellt eine Abkühlkurve dar und kann mit einer Sollabkühlkurve verglichen werden. Basierend auf der Differenz zwischen der bestimmten Abkühlkurve und der Sollabkühlkurve können die Strömungsgeschwindigkeiten des gasförmigen und des flüssigen Mediums aus der zumindest einen Düse so gesteuert werden, dass der zumindest einen Gießform während des Abkühlprozesses mehr oder weniger Wärmemenge entzogen wird.

In einer weiteren bevorzugten Ausführungsform des erfindungsgemäßen Verfahrens können als gasförmiges Medium Luft und als flüssiges Medium Wasser eingesetzt werden. Luft bietet den Vorteil, dass sie aus der Umgebung genutzt werden und problemlos wieder in die Umgebung entweichen kann. Wasser bietet den Vorteil, dass es beispielsweise das Material der Gießform nicht angreift und darüber hinaus keinen negativen Einfluss auf die Additive und Wachse, aus denen die pastöse Masse besteht, hat, da es beispielsweise die Oberflächenspannung des Gemisches der Wachse und Additive nicht herabsetzt. Es ist jedoch darauf zu achten, dass sich in dem verwendeten Wasser keine Keime bilden. Hierzu können beispielsweise Filter oder Zusätze verwendet werden.

Die oben genannte Aufgabe wird auch gelöst durch eine erfindungsgemäße Vorrichtung zum Kühlen von Gießformen, insbesondere zum Kühlen von Gießformen für kosmetische Produkte. Die Vorrichtung weist auf zumindest eine Einhausung mit zumindest einer Öffnung zum zumindest teilweise Einbringen von zumindest einer Gießform in die zumindest eine Einhausung und zumindest eine Düse zum Erzeugen eines feuchten Nebels innerhalb der zumindest einen Einhausung durch Vermischen eines gasförmigen und eines flüssigen Mediums sowie zum Hervorrufen einer Konvektion innerhalb der zumindest einen Einhausung durch Einleiten nur des gasförmigen Mediums in die zumindest eine Einhausung. Beispielsweise kann die Vorrichtung so aufgebaut sein, dass die zumindest eine Öffnung der zumindest einen Einhausung nach oben zeigt, sodass die zumindest eine Gießform von oben mittels einer Vertikalbewegung in die Einhausung eingebracht werden kann.

In einer weiteren bevorzugten Ausführungsform der erfindungsgemäßen Vorrichtung kann die zumindest eine Düse angepasst sein, das gasförmige und das flüssige Medium in die zumindest eine Einhausung einzuleiten. Beispielsweise kann die zumindest eine Düse an verschiedenen Positionen innerhalb der Einhausung positioniert sein, um für eine gezielte Benetzung der äußeren Oberfläche der zumindest einen Gießform mit dem erzeugten feuchten Nebel zu sorgen und beispielsweise um die Strömung des gasförmigen Mediums bei der erzwungenen Konvektion gezielt zu lenken. Die Düse kann auch in ihrer Ausrichtung angepasst werden, um beispielsweise während der erzwungenen Konvektion die Strömung gezielt zu lenken. Die Zufuhr des gasförmigen Mediums und des flüssigen Medium geschieht dabei von außerhalb der Einhausung über Anschlüsse, die mit der Düse verbunden sind.

In einer weiteren bevorzugten Ausführungsform der erfindungsgemäßen Vorrichtung kann es sich bei der zumindest einen Düse um einen Druckzerstäuber mit einem Flachstrahlwinkel von 95° und externer Mischung handeln. Die externe Mischung erlaubt die voneinander unabhängige Steuerung der Strömungsgeschwindigkeiten der beiden Media. Das Prinzip bei der Vermischung und der Zerstäubung der beiden Media beruht dabei auf der Scherwirkung, welche die beiden Media bei Aufprall aufeinander ausüben.

In einer bevorzugten Ausführungsform der erfindungsgemäßen Vorrichtung weist die Vorrichtung weiter auf zumindest einen Abscheider, durch den das überschüssige gasförmige Medium aus der zumindest einen Einhausung entweichen kann und in dem das überschüssige flüssige Medium aus der zumindest einen Einhausung zurückbleiben kann. Der Abscheider kann am tiefsten Punkt der Einhausung, beispielsweise an ihrem Boden, angebracht sein. Bei dem Erzeugen des feuchten Nebels und bei dem Hervorrufen der Konvektion werden eine bestimmte Stoffmenge des gasförmigen und des flüssigen Mediums von außen in die Einhausung eingebracht. Um einer Druckerhöhung innerhalb der Einhausung entgegenzuwirken, kann das überschüssige gasförmige Medium durch den Abscheider hindurch aus dem Inneren der Einhausung entweichen. Das überschüssige flüssige Medium läuft unter Einwirkung der Schwerkraft in den Abscheider und bleibt im Abscheider zurück. Das flüssige Medium kann beispielsweise in einem auswechselbaren Behälter gesammelt werden, um wiederverwendet zu werden. Der Abscheider kann das flüssige Medium aber auch gleich zur Düse oder in ein Reservoir zurückführen.

In einer weiteren bevorzugten Ausführungsform der erfindungsgemäßen Vorrichtung weist die Vorrichtung auf ein Mittel zum Steuern der Strömungsgeschwindigkeiten des gasförmigen und des flüssigen Mediums aus der zumindest einen Düse bei dem Erzeugen des feuchten Nebels und / oder bei dem Hervorrufen der Konvektion. Das gasförmige und das flüssige Medium können jeweils aus einem Reservoir über eine Zuleitung zum Eingang der Düse geführt werden. Im Reservoir kann hierfür von Pumpen ein Überdruck erzeugt werden. Das gasförmige und das flüssige Medium können aber auch direkt zum Düseneingang gepumpt werden. Die Strömungsgeschwindigkeiten des gasförmigen und des flüssigen Mediums aus der zumindest einen Düse hängen dabei im Wesentlichen von dem Differenzdruck zwischen Düseneingang und Düsenausgang, sowie von der Querschnittsfläche der Düsenöffnungen ab, durch die das jeweilige Medium strömt. Wenn man die Querschnittsfläche der Düsenöffnungen als konstant annimmt, lassen sich die jeweiligen Strömungsgeschwindigkeiten des gasförmigen und des flüssigen Mediums aus der zumindest einen Düse somit über die Steuerung der jeweiligen Druckdifferenz zwischen Düseneingang und Düsenausgang steuern. Bei dem Mittel zum Steuern der Strömungsgeschwindigkeit kann es sich beispielsweise um zumindest ein Druckregelventil handeln, das jeweils in der Zuleitung zwischen Reservoir und Düseneingang montiert ist. Mit dem jeweiligen Druckregelventil kann der Druck am Düseneingang durch drosseln der jeweiligen Zuleitung vom jeweiligen Reservoir gesteuert werden. Es kann auch die Pumpleistung der Pumpen gesteuert werden, von denen das gasförmige und das flüssige Medium zum Düseneingang gepumpt werden. Dem Fachmann sind weitere Mittel bekannt, mit denen eine Steuerung der Strömungsgeschwindigkeit ermöglicht wird. Beispielsweise können vor dem Düseneingang einfache Stromventile eingesetzt werden, die auf dem Prinzip von einfachen Drosselventilen beruhen.

In einer weiteren bevorzugten Ausführungsform der erfindungsgemäßen Vorrichtung weist die Vorrichtung auf ein Mittel zum Bewegen der zumindest einen Einhausung und / oder der zumindest einen Gießform. Die zumindest eine Einhausung und / oder die zumindest eine Gießform können dabei beispielsweise auf zumindest einem Strukturelement befestigt sein. Bei dem Mittel zum Bewegen der zumindest einen Einhausung und / oder der zumindest einen Gießform und / oder des zumindest einen Strukturelements kann es sich beispielsweise um zumindest einen Hubmechanismus handeln. Der zumindest eine Hubmechanismus kann beispielsweise von zumindest einem Schrittmotor angetrieben werden. Ein Schrittmotor ist dabei ein mehrphasiger Synchronmotor, der mittels einer elektronischen Schaltung impulsmäßig angesteuert wird. Bei einer Ansteuerung mit einem Impuls führt die Motorwelle eine Drehung um einen bestimmten Drehwinkel aus, den so genannten Schrittwinkel. Bei dem Mittel, das den zumindest einen Hubmechanismus in Bewegung versetzt, kann es sich auch um einen Servomotor handeln. Ein Servomotor ist dabei ein Elektromotor, der über einen Sensor für die Positionsbestimmung, die Winkelposition und die Drehgeschwindigkeit der Motorwelle kontrollieren kann. Dem Fachmann sind noch weitere Mittel bekannt, um die zumindest eine Einhausung und / oder die zumindest eine Gießform und / oder das zumindest eine Strukturelement in Bewegung zu versetzen und die zumindest eine Gießform zumindest teilweise in die zumindest eine Einhausung einzubringen. Beispielsweise können hierfür auch Hydraulik- oder Pneumatik-Aktuatoren verwendet werden.

In einer weiteren bevorzugten Ausführungsform der erfindungsgemäßen Vorrichtung weist die Vorrichtung auf ein Mittel zum Bestimmen zumindest einer Temperatur der zumindest einen Gießform und ein Mittel zum Steuern der Strömungsgeschwindigkeiten des gasförmigen und des flüssigen Mediums aus der zumindest einen Düse bei dem Erzeugen des feuchten Nebels und / oder bei dem Hervorrufen der Konvektion innerhalb der Einhausung, basierend auf der zumindest einen bestimmten Temperatur. Die Temperatur der Gießform kann beispielsweise mit zumindest einem Pyrometer bestimmt werden, das die Wärmestrahlung berührungslos misst, die von der äußeren Oberfläche der Gießform emittiert wird, und anhand eines bekannten Emissionsgrades von der äußeren Oberfläche der Gießform, aus der gemessenen Wärmestrahlung die Temperatur der äußeren Oberfläche der Gießform bestimmt. Dabei erfasst das Pyrometer bei der Durchführung einer Messung eine bestimmte Fläche auf der äußeren Oberfläche der Gießform, die als Messfläche bezeichnet werden kann, wobei die Messfläche in der Regel kleiner ist, als die äußere Oberfläche der Gießform. Erfindungsgemäß kann das Pyrometer so in die Vorrichtung integriert sein, dass es zumindest um eine Achse und / oder entlang einer Achse beweglich ist, wodurch das Pyrometer für verschiedene Messungen verschieden ausgerichtet werden kann, um die Wärmestrahlung von verschiedenen Messflächen auf der äußeren Oberfläche der Gießform messen zu können. Das Pyrometer kann auch so ausgerichtet werden, dass es die Wärmestrahlung von verschiedenen Messflächen auf der äußeren Oberfläche von verschiedenen Gießformen messen kann. Das Pyrometer kann auch so ausgerichtet sein, dass die Temperatur der Oberfläche der erwärmten pastösen Masse bestimmt werden kann. Die Ausrichtung des Pyrometers kann beispielsweise mittels eines Schrittmotors herbeigeführt werden. Alternativ kann das Pyrometer auch mittels eines Servomotors ausgerichtet werden. Beispielsweise können für die Ausrichtung des Pyrometers auch Hydraulik- oder Pneumatik-Aktuatoren verwendet werden. Der zumindest eine Wert der bestimmten Temperatur kann beispielsweise an einen Mikrocontroller übermittelt werden, der basierend auf der bestimmten Temperatur der zumindest einen Messfläche der zumindest einen Gießform oder der erwärmten pastösen Masse die Strömungsgeschwindigkeiten des gasförmigen und des flüssigen Mediums aus der zumindest einen Düse bei dem Erzeugen des feuchten Nebels und / oder bei dem Hervorrufen der Konvektion innerhalb der Einhausung steuern kann. Der Mikrocontroller kann darüber hinaus auch Anweisungen geben, mit denen der zumindest eine Hubmechanismus in Bewegung versetzt werden kann, von dem die zumindest eine Einhausung und / oder die zumindest eine Gießform und / oder das zumindest eine Strukturelement bewegt werden. Dem Fachmann ist bewusst, dass auch andere Mittel zum Bestimmen einer Temperatur verwendet werden können. Beispielsweise kann die Temperatur der zumindest einen Gießform oder der erwärmten pastösen Masse auch mittels Temperatursensoren innerhalb der zumindest einen Gießform bestimmt werden, bei denen beispielsweise der elektrische Widerstand von der Temperatur abhängig ist. Dem Fachmann ist bewusst, dass die Bestimmung beziehungsweise Messung der Temperatur der zumindest einen Gießform oder der erwärmten pastösen Masse parallel zu der adiabatischen Kühlung - also während der adiabatischen Kühlung - bestimmt werden kann. Darauf basierend können die Strömungsgeschwindigkeiten des gasförmigen und des flüssigen Mediums aus der zumindest einen Düse bei dem Erzeugen des feuchten Nebels und / oder bei dem Hervorrufen der Konvektion innerhalb der Einhausung während der adiabatischen Kühlung gesteuert werden. Hierfür können beispielsweise Druckregelventile eingesetzt werden, die auf Signale des Mikrocontrollers reagieren und abhängig davon den Druck am Düseneingang einstellen. Es können auch Pumpen eingesetzt werden, die das gasförmige und das flüssige Medium direkt zum Düseneingang pumpen, und deren Pumpleistung auf Signalen des Mikrocontrollers basiert und abhängig davon der Druck am Düseneingang eingestellt wird.

In einer weiteren bevorzugten Ausführungsform der erfindungsgemäßen Vorrichtung weist die zumindest eine Öffnung in der zumindest einen Einhausung eine Dichtung auf. Bei dem zumindest teilweise Einbringen der zumindest einen Gießform in die zumindest eine Einhausung kann die Dichtung beispielsweise mit der Gießform oder mit dem Strukturelement, an dem die Gießform befestigt ist, in Kontakt kommen und somit das Innere der Einhausung gegen die Umgebung abdichten. Dabei ist es auch möglich, dass nur ein Teil der Dichtung mit der Gießform oder mit dem Strukturelement, an dem die Gießform befestigt ist, in Kontakt kommt. Das Strukturelement, an dem die Gießform befestigt ist, kann auch ein abstehendes Element aufweisen. Dabei kann die Dichtung beispielsweise zumindest teilweise in das abstehende Element eingebracht werden und mit dem abstehenden Element in Kontakt kommen. Es ist aber auch möglich, dass das abstehende Element in die Dichtung eingebracht wird. Bei der Dichtung kann es sich zum Beispiel um eine V-Ringdichtung handeln. Beispielsweise kann die Dichtung aus Kautschuk, wie beispielsweise Nitrilkautschuk (NBR) bestehen. Die Dichtung kann beispielsweise in einem Temperaturbereich von -40°C bis 80°C eingesetzt werden. Darüber hinaus kann die Dichtung beispielsweise eine spezifische Shore Härte aufweisen, die für die benötigte Abdichtung geeignet ist. Diese Shore Härte kann eine Shore-A Härte von 70 sein. Es ist dem Fachmann bewusst, dass auch andere Dichtungsformen und Dichtungsmaterialien eingesetzt werden können.

Die Erfindung wird nachfolgend anhand von Ausführungsbeispielen mit den beigefügten Zeichnungen näher erläutert. Aus den beschriebenen Ausführungsbeispielen ergeben sich weitere Einzelheiten, Merkmale und Vorteile des Gegenstands der Erfindung. Es zeigen:
- Fig. 1: einen Vertikalschnitt durch eine exemplarische Gießform, befüllt mit einer erwärmten pastösen Masse, und eine erfindungsgemäße Vorrichtung zum adiabatischen Kühlen vor dem adiabatischen Kühlen;
- Fig. 2: die in Fig. 1 gezeigte exemplarische Gießform, befüllt mit einer erwärmten pastösen Masse zum Teil in die erfindungsgemäße Vorrichtung zum adiabatischen Kühlen bei dem adiabatischen Kühlen eingebracht.

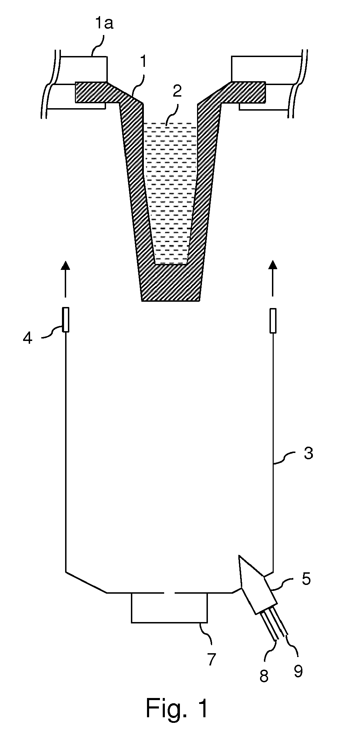

Figur 1 zeigt anhand eines Vertikalschnitts eine Gießform 1, die mit einer erwärmten pastösen Masse 2 gefüllt ist, und die an einem Strukturelement 1a befestigt ist sowie eine Einhausung 3, die an ihrer nach oben gerichteten Öffnung eine Dichtung 4 aufweist und bei der sich in ihrem unteren Bereich eine Düse 5 und ein Abscheider 7 befinden. Die Gießform 1 und die Einhausung 3 befinden sich dabei jeweils in einer Position, in der die Gießform 1 noch nicht in die Einhausung 3 eingebracht wurde. Das Einbringen der Gießform 1 in die Einhausung 3 wird von den vertikalen Pfeilen angedeutet. Das Volumen der Einhausung 3 kann so bemessen sein, dass zumindest eine Gießform 1 in die Einhausung 3 eingebracht werden kann. Es können also auch mehrere Gießformen 1 in die Einhausung 3 eingebracht werden.

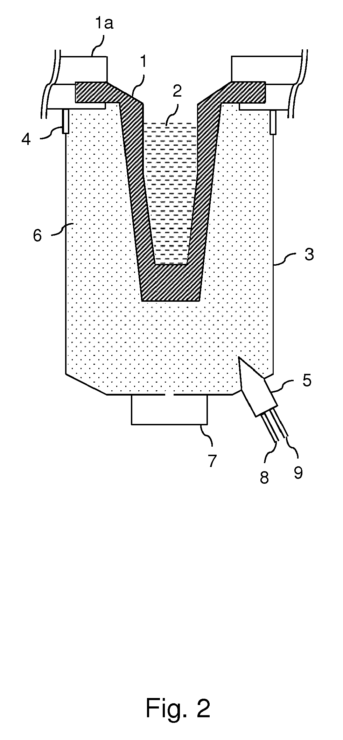

Figur 2 zeigt anhand eines Vertikalschnitts die Gießform 1, die mit einer erwärmten pastösen Masse 2 gefüllt ist. Die Gießform 1 und die Einhausung 3 befinden sich dabei jeweils in einer Position, in der die Gießform 1 zumindest teilweise in die Einhausung 3 eingebracht ist. Die Dichtung 4 dichtet das Innere der Einhausung 3 gegen die Umgebung ab, indem sie an das Strukturelement 1a gedrückt wird, an dem die Gießform 1 befestigt ist. Der von der Düse 5 erzeugte feuchte Nebel 6 ist somit im Inneren der Einhausung 3 eingeschlossen und benetzt die hydrophilen Oberflächen im Inneren der Einhausung 3, wie beispielsweise die äußere Oberfläche der Gießform 1. Mittels der Düse 5 kann auch eine Konvektion hervorgerufen werden, von der die äußere Oberfläche der Gießform 1 umströmt wird. Für das Erzeugen des feuchten Nebels 6 und für das Hervorrufen der erzwungenen Konvektion wird die Düse 5 über Zuleitungen 8, 9 jeweils mit einem gasförmigen und mit einem flüssigen Medium versorgt. Das überschüssige gasförmige Medium kann dabei über den Abscheider 7 in die Umgebung entweichen und das überschüssige flüssige Medium kann dabei in dem Abscheider 7 zurückbleiben und wiederverwendet werden.

Es wird vom Fachmann verstanden werden, dass die gezeigten Ausführungsbeispiele nur beispielhaft sind und alle gezeigten Elemente, Module, Bauteile, Teilnehmer und Einheiten verschieden ausgestaltet sein können aber dennoch die hier beschriebenen Grundfunktionalitäten erfüllen können.

## Patentansprüche

1. Ein Verfahren zum Kühlen von Gießformen, insbesondere zum Kühlen von Gießformen für kosmetische Produkte, das Verfahren aufweisend:
zumindest teilweise Einbringen von zumindest einer Gießform (1) in zumindest eine Einhausung (3);
Erzeugen eines feuchten Nebels (6) innerhalb der zumindest einen Einhausung (3) durch Vermischen eines gasförmigen und eines flüssigen Mediums mittels einer Düse (5); und
Hervorrufen einer Konvektion innerhalb der zumindest einen Einhausung (3) durch Einleiten nur des gasförmigen Mediums in die zumindest eine Einhausung (3) mittels der Düse (5).

2. Das Verfahren nach Anspruch 1, wobei das zumindest teilweise Einbringen von der zumindest einen Gießform (1) in die zumindest eine Einhausung (3) ein Bewegen der zumindest einen Einhausung (3) und / oder der zumindest einen Gießform (1) aufweist.

3. Das Verfahren nach einem der Ansprüche 1 oder 2, weiter aufweisend:
Steuern der Strömungsgeschwindigkeiten des gasförmigen und des flüssigen Mediums aus der zumindest einen Düse (5) bei dem Erzeugen des feuchten Nebels (6) und / oder bei dem Hervorrufen der Konvektion.

4. Das Verfahren nach einem der Ansprüche 1 bis 3, weiter aufweisend:
Bestimmen zumindest einer Temperatur der zumindest einen Gießform (1); und
Steuern der Strömungsgeschwindigkeiten des gasförmigen und des flüssigen Mediums aus der zumindest einen Düse (5) bei dem Erzeugen des feuchten Nebels (6) und / oder bei dem Hervorrufen der Konvektion, basierend auf der zumindest einen bestimmten Temperatur.

5. Das Verfahren nach einem der Ansprüche 1 bis 4, wobei als gasförmiges Medium Luft und als flüssiges Medium Wasser eingesetzt werden.

6. Eine Vorrichtung zum Kühlen von Gießformen, insbesondere zum Kühlen von Gießformen für kosmetische Produkte, die Vorrichtung aufweisend:
zumindest eine Einhausung (3) mit zumindest einer Öffnung zum zumindest teilweise Einbringen von zumindest einer Gießform (1) in die zumindest eine Einhausung (3); und
zumindest eine Düse (5) zum Erzeugen eines feuchten Nebels (6) innerhalb der zumindest einen Einhausung (3) durch Vermischen eines gasförmigen und eines flüssigen Mediums und zum Hervorrufen einer Konvektion innerhalb der zumindest einen Einhausung (3) durch Einleiten nur des gasförmigen Mediums in die zumindest eine Einhausung (3).

7. Die Vorrichtung nach Anspruch 6, wobei die zumindest eine Düse (5) angepasst ist, das gasförmige und das flüssige Medium in die zumindest eine Einhausung (3) einzuleiten.

8. Die Vorrichtung nach einem der Ansprüche 6 oder 7, wobei es sich bei der zumindest einen Düse (5) um einen Druckzerstäuber mit externer Mischung handelt.

9. Die Vorrichtung nach einem der Ansprüche 6 bis 8, weiter aufweisend:
zumindest einen Abscheider (7), durch den das überschüssige gasförmige Medium aus der zumindest einen Einhausung (3) entweicht und in dem das überschüssige flüssige Medium aus der zumindest einen Einhausung (3) zurückbleibt.

10. Die Vorrichtung nach einem der Ansprüche 6 bis 9, weiter aufweisend:
ein Mittel zum Steuern der Strömungsgeschwindigkeiten des gasförmigen und des flüssigen Mediums aus der zumindest einen Düse (5) bei dem Erzeugen des feuchten Nebels (6) und / oder bei dem Hervorrufen der Konvektion.

11. Die Vorrichtung nach einem der Ansprüche 6 bis 10, weiter aufweisend:
ein Mittel zum Bewegen der zumindest einen Einhausung (3) und / oder der zumindest einen Gießform (1).

12. Die Vorrichtung nach einem der Ansprüche 6 bis 11, weiter aufweisend:
ein Mittel zum Bestimmen zumindest einer Temperatur der zumindest einen Gießform (1); und
ein Mittel zum Steuern der Strömungsgeschwindigkeiten des gasförmigen und des flüssigen Mediums aus der zumindest einen Düse (5) bei dem Erzeugen des feuchten Nebels (6) und / oder bei dem Hervorrufen der Konvektion innerhalb der Einhausung (3), basierend auf der zumindest einen bestimmten Temperatur.

13. Die Vorrichtung nach einem der Ansprüche 6 bis 12, wobei die zumindest eine Öffnung in der zumindest einen Einhausung (3) eine Dichtung (4) aufweist.
